# EUROPEAN PATENT APPLICATION

(11) **EP 3 401 247 A1**
(43) Date of publication of application: **14.11.2018**
(21) Application number: 18170609.4
(22) Date of filing: 03.05.2018
(51) Int. Cl.: B65G 47/51, B65G 47/71, B65G 47/76

(54) **CONVEYOR SYSTEM**

(30) Priority: 11.05.2017 SE 1750580
(71) Applicant: Fredriksons Verkstads AB, 592 23 Vadstena (SE)
(72) Inventor: KARLSSON, Tommy, 591 46 MOTALA (SE)
(74) Representative: Bergenstråhle Group AB

(57) **Abstract**

Disclosed is a guiding system (30) of a conveyor system for guiding goods from an incoming conveyor (10) to an accumulator unit (20) of the conveyor system. The guiding system (30) comprises a first conveyor (31) and a second conveyor (34), the first and second conveyors having first portions (31a, 34a) arranged to be positioned parallel to and on opposite sides of the incoming conveyor (10), and second portions (31b, 34b) arranged to be positioned parallel to conveyors (21a-f, 22a-f) of the accumulator unit (20). The guiding system further comprises a guide (38) that is switchable between guiding goods from the incoming conveyor (10) to the first conveyor (31) or to the second conveyor (34). Disclosed is also a conveyor system comprising such a guiding system and an accumulator unit.

## Description

### Technical field

The present disclosure relates generally to a conveyor system for conveying goods, comprising a guiding system of a conveyor system for guiding goods from an incoming conveyor to an accumulator unit of the conveyor system.

### Background

Conveyor systems are used for moving goods or material from one place to another, for example in the industry. Conveyor systems may be used for example in food processing, beverage industry, material handling, automotive industry and packaging industry. The goods to be guided may be any kind of goods or material, for example food products, cardboard products etc.

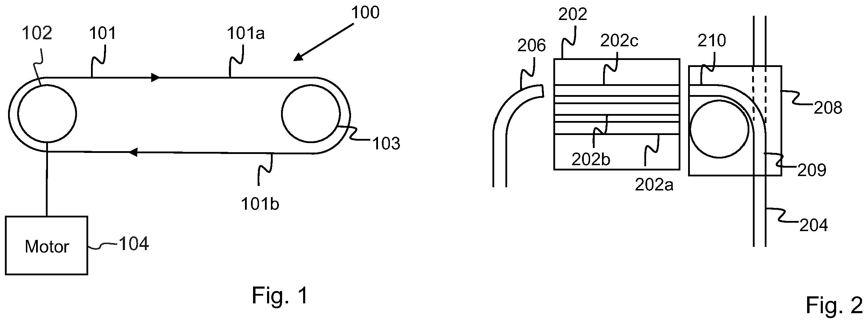

A conveyor system generally comprises a number of conveyor sections joined together into a complete conveyor system. A prior art conveyor section 100 is shown in fig. 1. The conveyor section 100 comprises an endless chain 101 or belt onto which the goods to be transported are to be positioned. The endless chain is arranged around two spaced apart wheels 102, 103, arranged at a respective end of the conveyor section. The conveyor section may also comprise additional wheels in between the spaced apart wheels arranged at the respective end. Normally, one of the wheels at the respective ends of the conveyor section is a driving wheel 102 and the other wheel 103 is freewheeling. The driving wheel 102 is driven to rotate by a motor 104 whereby the endless chain 101 is driven forward along the conveyor section on the upper side 101a of the section 100, rotating around the wheels 102, 103 and returning on the lower side 101b of the section. Individual conveyor sections 100 may for example have a straight shape, as in fig. 1, or a curved shape. The shape of each section is selected to create a conveyor system adapted to the needs and prerequisites for the purpose for which it is to be used.

Each section also comprises a static body of for example stainless steel that gives the system its robustness, its body and its shape. The static body is not moving when the endless chain is driven. The static body comprises walls covering the wheels and possibly also the motors, as well as walls covering the sides of the endless chain and used for guiding the movement of goods onto the endless chain of each section so that the goods cannot fall off the chain.

A conveyor system may further comprise an accumulator unit that comprises a plurality of parallel conveyor sections. The accumulator unit is used for accumulating goods at certain parts of the system. For example, if a downstream part of the system stands still for a while, or if there is for any other reason a queue downstream the accumulator unit, the production at parts of the system upstream of the accumulator unit can still carry on, accumulating goods at the parallel conveyor sections of the accumulating unit until the process at the downstream sections starts again, when accumulated packets can be transported from the accumulator unit onto the downstream sections again.

In a prior art conveyor system with accumulator unit 202 as shown in fig. 2, there is an incoming conveyor section 204 that supplies the accumulator unit 202 with goods. The accumulator unit comprises a plurality of parallel conveyors 202a-c. The accumulator unit further comprises an outgoing conveyor section 206 that moves goods residing in the accumulator unit 202 away from the accumulator unit. There is further a guiding unit 208 that is arranged on top of the incoming conveyor section 204 and that is movable along the incoming conveyor section 204. The guiding unit 208 has an inlet 209 for receiving goods from the incoming conveyor section, the inlet 209 being arranged onto the incoming conveyor section 204, and an outlet 210 that has a perpendicular direction compared to the inlet 209. The guiding unit 208 is moveable along the incoming conveyor section so that its outlet 210 can be positioned at an inlet end of any of the plurality of parallel conveyor sections 202a-c of the accumulator unit. When a piece of goods is moved along the incoming conveyor section 204 it is moved into the inlet 209 of the guiding unit 208 and out of the outlet 210 of the guiding unit onto the one of the plurality of parallel conveyor sections 202a-c corresponding to the current position of the guiding unit.

In such a prior art accumulator system, the incoming conveyor section 204 has an extension substantially perpendicular to the extension direction of the parallel conveyor sections 202a-c of the accumulator unit. When a first 202a of the parallel conveyor sections of the accumulator unit has been filled up with goods to a certain extent, the guiding unit 208 is moved a step along the incoming conveyor section 204 so that its outlet 210 is positioned at a second 202b of the parallel conveyor sections of the accumulator unit, resulting in that the following goods are guided into the second section 202b instead of the first section 202a. As long as the guiding unit 208 is moved along the moving direction of the incoming conveyor section the goods just travel a bit further on the incoming conveyor section before they are moved into the guiding unit 208. However, when the guiding unit is moved against the moving direction of the incoming conveyor section, e.g. so that the outlet is moved from the second section 202b to the first section 202a, the goods on the incoming conveyor section 204 are suddenly to travel a shorter distance on the incoming conveyor section, which means that if the goods travel close to each other on the incoming conveyor section, the first piece of goods to travel a shorter distance is pressed back on the incoming conveyor section 204 against the conveying direction, resulting in that the first piece of goods bumps into one or more of the following pieces of goods. For goods that are hard packages this may not cause any problems but for goods that are softer packages, such as a novel type of package used in the dairy product industry, a problem may occur in that the soft packages are crumpled or get stuck into each other when they bump into each other.

Such a problem has been solved in the prior art by creating a larger distance between incoming goods, especially at the process of moving the guiding unit. However, such larger distances between incoming goods result in lower efficiency of the conveyor system. In some prior art, a temporary larger distance has been created by either stopping an incoming accumulator during movement of the guiding unit, or by gripping and holding products still, during the movement of the guiding unit. However, such gripping and holding is difficult to accomplish for soft packages. Consequently, there is a need for a smooth and efficient guiding system for guiding goods from an incoming conveyor section into an accumulator unit having a plurality of parallel conveyor sections, which guiding system can handle any type of incoming goods.

### Summary

It is an object of the invention to address at least some of the problems and issues outlined above. It is an object of some embodiments of the invention to be able to smoothly and efficiently guide packages of a conveyor system from an incoming conveyor into an accumulator unit comprising a number of parallel conveyors. It is possible to achieve these objects and others by using a conveyor system and a guiding system of a conveyor system as defined in the attached independent claims.

According to one aspect, a conveyor system is provided. The conveyor system comprises an incoming conveyor and an accumulator unit comprising a plurality of parallel conveyors. The incoming conveyor is arranged to transport goods to the accumulator unit. The conveyors of the accumulator unit extend in a different direction than the incoming conveyor. The conveyor system further comprises a guiding system for guiding goods from the incoming conveyor to the accumulator unit of the conveyor system. The guiding system comprises a first conveyor having a first portion arranged to be positioned parallel to the incoming conveyor and a second portion arranged to be positioned parallel to conveyors of the accumulator unit. The guiding system further comprises a second conveyor having a first portion arranged to be positioned parallel to the incoming conveyor and a second portion arranged to be positioned parallel to the conveyors of the accumulator unit, the first portion of the first conveyor and the first portion of the second conveyor being arranged to be positioned on opposite sides of the incoming conveyor. The guiding system further comprises a guide adapted for guiding goods from the incoming conveyor either to the first conveyor or to the second conveyor, the guide being switchable between guiding goods to the first conveyor and guiding goods to the second conveyor. By such a system, when switching from guiding goods from the incoming conveyor into a first of the conveyors of the accumulator unit to guiding subsequent goods from the incoming conveyor into a second of the conveyors of the accumulator unit, the guide can be switched from the first conveyor to the second conveyor of the guiding unit, and subsequent goods are neatly moved into another conveyor of the accumulator unit via the second conveyor of the guiding unit. Such a solution also solves the problem of prior art of moving the guiding system opposite the flowing direction of goods, which earlier pushed goods of the incoming conveyor onto each other. In the system of the invention, when the first conveyor of the guiding system is to be moved opposite the flowing direction, the goods are guided onto the second conveyor instead and the first conveyor can be moved opposite the flowing direction while the goods are guided onto the second conveyor. Further, the guide is adapted for receiving instructions from a control unit of the conveyor system in order to switch between guiding goods to the first conveyor and guiding goods to the second conveyor. By using a control unit for such switching, the goods can be guided to the right conveyor and to the right accumulator unit conveyor based on e.g. how many packages there are on the different accumulator conveyors.

According to an embodiment, the conveyors of the accumulator unit extend substantially perpendicular to the incoming conveyor.

According to an embodiment, the guide has an inlet located at the incoming conveyor and an outlet that is movable between a first position at the first conveyor and a second position at the second conveyor, the guide being rotatably connected to the incoming conveyor at its inlet. Hereby, the guide can easily be moved between guiding goods towards the first conveyor or towards the second conveyor. Also, such a rotatably connected guide implies that the guide does not need to be moved in the goods flowing direction of the incoming conveyor for changing flowing direction to the first conveyor instead of to the second conveyor, or vice versa.

According to another embodiment, the guiding system further comprises an arm connected with its first end to the guide, at the outlet of the guide, and wherein the arm is arranged to move the outlet between the first position and the second position, based on instructions from a control unit of the conveyor system. By such an implementation, the control unit can easily move the guide between its first and second position via the arm.

According to another embodiment, the arm is arranged so that it can be shortened or lengthened when the guide is to be switched between the first position and the second position. For example, if the guide is in the first position and it is going to be moved to the second position, the arm is lengthened. Then the arm moves the outlet of the guide, from the first position at the first conveyor and into the second position at the second conveyor. Such an arm may be a pneumatic spring or a linear actuator.

According to another embodiment, the first conveyor is adapted to provide a first subset of the conveyors of the accumulator unit with goods and the second conveyor is adapted to provide a second subset of the conveyors of the accumulator unit with goods. Hereby, the guiding system can change from filling a first part of the accumulator unit, having the first subset of conveyors to filling a second part of the accumulator unit, having the second subset of conveyors. Such using of two different guides to two different parts of the accumulator unit results in an improved usage of accumulator capacity.

Further possible features and benefits of this solution will become apparent from the detailed description below.

### Brief description of drawings

The solution will now be described in more detail by means of exemplary embodiments and with reference to the accompanying drawings, in which:
Fig. 1 is a schematic side view of a conveyor section of a conveyor system according to prior art.
Fig. 2 is a schematic top view of a conveyor system according to prior art.
Fig. 3 is a perspective view of a conveyor system according to an embodiment of the invention.
Fig. 4 is a top view of the conveyor system of fig. 3.
Fig. 5 is a close-up view of a guiding system of a conveyor system according to an embodiment.

### Detailed description

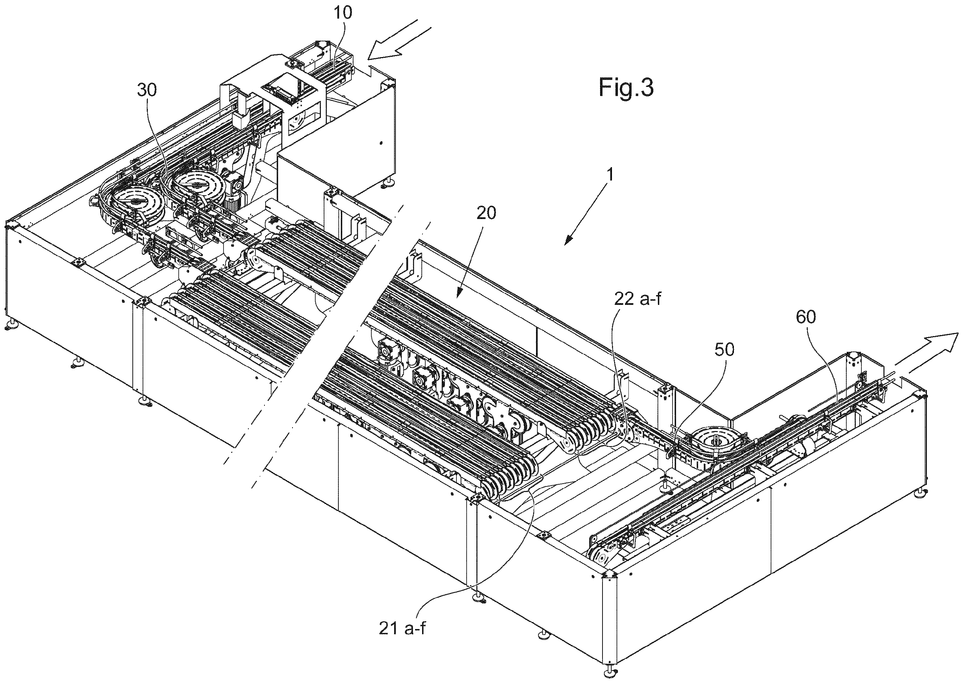

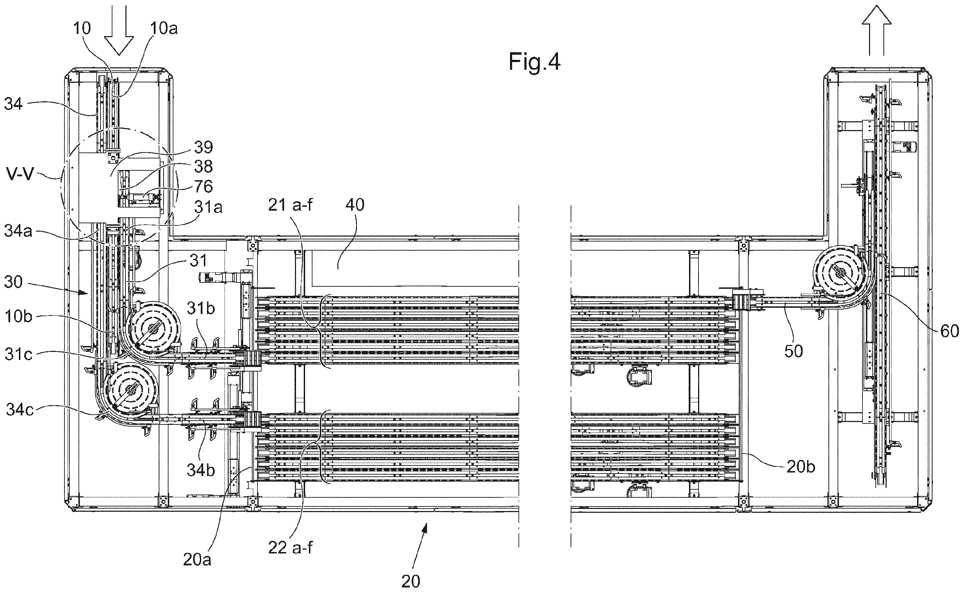

Fig. 3 and 4 show a conveyor system 1 according to an embodiment. The conveyor system 1 comprises an incoming conveyor 10 onto which goods travel from an upstream end 10a towards a downstream end 10b. The upstream end 10a of the incoming conveyor 10 can be connected to other parts of the conveyor system or to another conveyor system. The conveyor system 1 further comprises an accumulator unit 20 comprising a plurality of parallel conveyors 21a-f, 22a-f. The accumulator unit 20 has an incoming end 20a and an outgoing end 20b. The conveyors 21a-f, 22a-f of the accumulator unit 20 extend and transport goods from the incoming end 20a to the outgoing end 20b. The conveyors 21a-f, 22a-f of the accumulator unit 20 extend substantially perpendicular to the extension of the incoming conveyor 10. However, in other embodiments, the conveyors of the accumulator unit 20 may extend in another angle towards the incoming conveyor, such as 100, 60 or 45 degrees. The conveyor system 1 further comprises an outgoing connection conveyor 50 extending from the outgoing end 20b of the accumulator unit 20 and towards an outgoing conveyor 60.

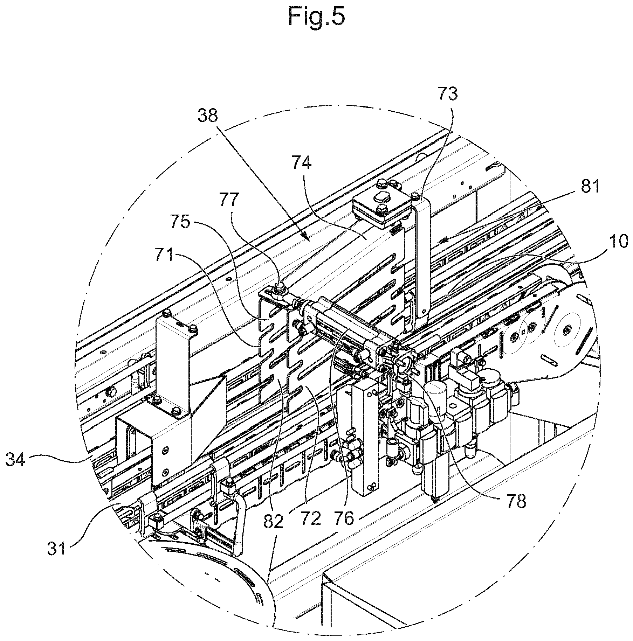

Further, the conveyor system 1 comprises a guiding system 30 for transporting goods from the incoming conveyor 10 to the accumulator unit 20. The guiding system 30 comprises a first conveyor 31 having a first portion 31a arranged to be positioned parallel to the incoming conveyor 10, a second portion 31b arranged to be positioned parallel to the conveyors 21a-f, 22a-f of the accumulator unit 20 and a third bent portion 31c that connects the first portion 31a to the second portion 31b. The guiding system 30 further comprises a second conveyor 34 having a first portion 34a arranged to be positioned parallel to the incoming conveyor 10, a second portion 34b arranged to be positioned parallel to the conveyors 21a-f, 22a-f of the accumulator unit 20 and a third bent portion 34c that connects the first portion 34a to the second portion 34b. Further, the first portion 31a of the first conveyor 31 and the first portion 34a of the second conveyor 34 are arranged to be positioned on opposite sides of the incoming conveyor 10. In other words, the incoming conveyor 10 is positioned between the first conveyor 31 and the second conveyor 34. The guiding system 30 further comprises a guide adapted for guiding goods from the incoming conveyor 10 either to the first portion 31a of the first conveyor 31 or to the first portion 34a of the second conveyor 34. The guide is in fig.4 positioned inside a guide chassis 39. The guide is shown in more detail in fig. 5, as reference number 38. The guide is switchable between guiding goods to the first conveyor 31 and guiding goods to the second conveyor 34.

Further, in the embodiment shown in figs. 2-3, the accumulator unit 20 comprises a first division comprising a first subset 21a-f of the parallel conveyors 21a-f, 22a-f, and a second division comprising a second subset 22a-f of the parallel conveyors. The first conveyor 31 of the guiding system 30 is arranged so that it supplies the first subset 21a-f and the second conveyor 34 of the guiding system is arranged so that it supplies the second subset 22a-f of the parallel conveyors. This implies that the second portion 31b of the first conveyor 31 is positioned so that goods can be transported from the incoming conveyor 10 into any of the parallel conveyors of the first subset 21a-f. Further, the second portion 34b of the second conveyor 34 can be positioned so that goods can be transported from the incoming conveyor 10 into any of the parallel conveyors of the second subset 22a-f. The end of the first and the second conveyor 31, 34 closest to the accumulator unit 20 may be arranged to be positioned so close to the accumulator unit that the goods on the first and second conveyor 31, 34 are transported over to the relevant conveyor of the accumulator unit 20 via driving from below, e.g. rollers.

The conveyor system 1 further comprises a control unit 40 that is electrically connected to the guide 38 in order to initiate switching of the guide between guiding goods into the first conveyor 31 and guiding goods into the second conveyor 34. The control unit 40 is further electrically connected to the guiding system 30 in order to guide the movement of the first and the second conveyor along the incoming conveyor 10 so that the outlet of the second part 31b, 34b of the first and the second conveyor 31, 34, respectively, is positioned at the one conveyor of the respective first and second subsets 21a-f, 22a-f that the respective first and second conveyor is to provide goods into for the moment. In order for the control unit 40 to know into which conveyor of the respective first and second subset 21a-f, 22a-f that goods are currently to be provided, the control unit may be connected to one or more sensors positioned along the conveyor system, which sensors sense how much goods there are currently on the individual conveyors of the accumulator unit 20. The control unit 40 has a processor for determining how to fill-up the conveyors of the accumulator unit 20 and therefore how to control the first conveyor 31 and the second conveyor 34 as well as the guide 38 based on the received information from the sensors and from a stored scheme or program defining how the conveyors of the accumulator is to be controlled and filled-up. The control unit 40 has a memory for storing such a scheme or program and for storing incoming data and other instructions. The control unit is in the embodiments of fig. 3 and 4 arranged at a long side of the accumulator unit 20. However, the control unit 40 may be positioned anywhere on or in the vicinity of the conveyor system 1 as long as it is communicatively connected to the guiding system 30.

Fig. 5 shows a part of the guiding system 30 and especially the guide 38 in more detail. Fig. 5 is a close-up view of part V-V in fig. 4, when the guide chassis 39 has been taken away. The guide 38 comprises two vertically arranged parallel plates 71, 72 that are hingedly connected at their first vertical short sides 74 to a rack 73, which in turn is securely connected to opposite longitudinal sides of the incoming conveyor 10. The vertically arranged parallel plates 71, 72 together creates the guide 38 that extends from the first vertical short sides 74, which together form an inlet 81 of the guide 38, along the incoming conveyor 10 to second vertical short sides 75 distal to the first vertical short sides 74, the second vertical short sides 75 together forming an outlet 82 of the guide 38. That the short sides 74, 75 are vertical signifies that they are approximately perpendicular to the conveyor extension. At their second vertical short sides 75, i.e. at the outlet 82 of the guide 38, the plates 71, 72 are secured to a first end 77 of an arm 76. The arm 76 extends substantially perpendicular to the incoming conveyor 10 as well as to the first and second conveyor 31, 34, from its first end 77 to its second end 78, which second end 78 is distal to the first end 77. The second end 78 of the arm 76 is connected to a rack of the conveyor system, and connected to the control unit 40. The arm 76 is controlled, for example by the control unit 40, so that it can be shortened or lengthened. The arm 76 may for example be a linear actuator or a pneumatic spring. Alternatively, the arm 76 may be a rotating pneumatic or electric unit. When the arm is shortened, the outlet 82 of the guide 38 is moved towards the first conveyor 31, at the same time as the guide 38 pivots around the hinge connection at its first vertical short side 74, whereby the inlet 81 of the guide is kept in place over the incoming conveyor 10. When the arm is lengthened, the outlet 82 of the guide 38 is moved towards the second conveyor 34 and the inlet 81 is kept in place over the incoming conveyor 10. Consequently, when goods are to be transported from the incoming conveyor 10 into the first conveyor 31 and further to the first subsets 21a-f of the accumulator unit, the arm 76 is controlled so that it has its shortest extension, and when goods are to be transported from the incoming conveyor 10 into the second conveyor 34 and further to the second subsets 22a-f of the accumulator unit 20, the arm 76 is controlled so that it has its longest extension.

When a process of conveying goods from the incoming conveyor 10 via the accumulator unit 20 and further to the outgoing conveyor 60 starts, the guide 38 is positioned in a first position for guiding goods from the incoming conveyor 10 into the first conveyor 31. The first conveyor 31 is then positioned with its outlet at an inlet of a first 21a of the first subset 21a-f of parallel conveyors of the accumulator unit 20. A detector, e.g. a photo cell, at a transition point between the outlet of the first conveyor 31 and the inlet of the first 21a of the first subset 21a-f of parallel conveyors detects that the outlet of the first conveyor is positioned here, sends a signal to the control unit 40, and the control unit 40 starts driving the first 21a of the first subset of parallel conveyors 21a-f. The first 21a of the first subset of parallel conveyors 21a-f may be driven stepwise for each piece of goods that is accumulated. If a piece of goods is late at the transition point, the detector signals this to the control unit 40 and the control unit stops the first 21a of the first subset of parallel conveyors 21a-f, in order to have approximately the same distance between pieces of goods at the accumulator conveyors.

At normal production, the guide 38 is positioned with its outlet 82 towards the first conveyor 31, and the first conveyor 31 is positioned with its outlet at the first 21a of the first subset 21a-f of parallel conveyors. Also, the outgoing connection conveyor 50 is positioned with its inlet at the outlet of the first 21a of the first subset 21a-f of parallel conveyors. As long as there is no production hindrance, such as stop or queue of goods downstream of the accumulator unit 20, the flow of packets goes right through the accumulator unit, the packets flowing onto the first 21a of the first subset 21a-f of parallel conveyors from its inlet to its outlet. When there is a production hindrance downstream the accumulator unit 20, packets are accumulated in the respective parallel conveyors of the accumulator unit 20.

The control unit 40 has control of the number of packets that are situated on each of the parallel conveyors of the first 21a-f and second 22a-f subset the accumulator unit 20, from e.g. detectors arranged at the accumulator unit 20. The control unit 40 controls the accumulation of packets from the guiding system 30 onto the accumulator unit 20 as well as off-loading from the accumulator unit to the outgoing conveyor 60. According to an embodiment, when there is a production hindrance downstream the accumulator unit 20, the control unit 40 controls the guide 38 to move from the first conveyor 31 to the second conveyor 34 so that subsequent packets flowing on the incoming conveyor 10 will be guided onto the second conveyor and further onto any of the second subset 22a-f of conveyors, preferably starting with a first 22a of the second subset 22a-f of conveyors. Simultaneously as the subsequent packages are guided onto the second subset 22a-22f of conveyors, the first conveyor 31 is moved so that its outlet is situated at the inlet of a second 21b of the first subset 21a-f of conveyors. Thereafter, packets that are remaining on the first conveyor 31 are moved from the first conveyor 31 onto the second 21b of the first subset 21a-f of conveyors.

Although the description above contains a plurality of specificities, these should not be construed as limiting the scope of the concept described herein but as merely providing illustrations of some exemplifying embodiments of the described concept. It will be appreciated that the scope of the presently described concept fully encompasses other embodiments which may become obvious to those skilled in the art, and that the scope of the presently described concept is accordingly not to be limited. Reference to an element in the singular is not intended to mean "one and only one" unless explicitly so stated, but rather "one or more." All structural and functional equivalents to the elements of the above-described embodiments that are known to those of ordinary skill in the art are expressly incorporated herein by reference and are intended to be encompassed hereby. Moreover, it is not necessary for an apparatus or method to address each and every problem sought to be solved by the presently described concept, for it to be encompassed hereby. In the exemplary figures, a broken line generally signifies that the feature within the broken line is optional.

## Claims

1. A conveyor system (1) comprising:
an incoming conveyor (10),
an accumulator unit (20) comprising a plurality of parallel conveyors (21a-f, 22a-f), wherein the incoming conveyor (10) is arranged to transport goods to the accumulator unit, and wherein the conveyors of the accumulator unit (20) extend in a different direction than the incoming conveyor (10), and
a guiding system (30) comprising a first conveyor (31), a second conveyor (34) and a guide (38), said guide (38) being adapted for guiding goods from the incoming conveyor (10) either to the first conveyor (31) or to the second conveyor (34), and the guide (38) being switchable between guiding goods to the first conveyor (31) and guiding goods to the second conveyor (34) **characterized in that:**
the first conveyor (31) having a first portion (31a) arranged to be positioned parallel to the incoming conveyor (10) and a second portion (31b) arranged to be positioned parallel to conveyors (21a-f, 22a-f) of the accumulator unit (20),
the second conveyor (34) having a first portion (34a) arranged to be positioned parallel to the incoming conveyor (10) and a second portion (34b) arranged to be positioned parallel to the conveyors (21a-f, 22a-f) of the accumulator unit (20), the first portion (31a) of the first conveyor (31) and the first portion (34a) of the second conveyor (34) being arranged to be positioned on opposite sides of the incoming conveyor (10), and
the guide (38) being adapted for receiving instructions from a control unit (40) of the conveyor system in order to switch between guiding goods to the first conveyor (31) and guiding goods to the second conveyor (34).

2. Conveyor system (1) according to claim 1, wherein the conveyors of the accumulator unit (20) extend substantially perpendicular to the incoming conveyor (10).

3. Conveyor system (1) according to claim 1 or 2, wherein the guide (38) has an inlet (81) located at the incoming conveyor (10) and an outlet (82) that is movable between a first position at the first conveyor (31) and a second position at the second conveyor (34), the guide (38) being rotatably connected to the incoming conveyor (10) at its inlet (81).

4. Conveyor system (1) according to claim 3, further comprising an arm (76) connected with its first end (77) to the guide (38), at the outlet (82) of the guide, and wherein the arm (76) is arranged to move the outlet (82) between the first position and the second position, based on instructions from the control unit (40) of the conveyor system.

5. Conveyor system (1) according to claim 4, wherein the arm (76) is arranged so that it can be shortened or lengthened when the guide (38) is to be switched between the first position and the second position.

6. Conveyor system (1) according to claim 5, wherein the arm (76) is a pneumatic spring or a linear actuator.

7. Conveyor system (1) according to any of the preceding claims, wherein the first conveyor (31) is adapted to provide a first subset (21a-f) of the conveyors of the accumulator unit (20) with goods and the second conveyor (34) is adapted to provide a second subset (22a-f) of the conveyors of the accumulator unit (20) with goods.
